# EUROPÄISCHE PATENTSCHRIFT

(11) **EP 0 538 712 B1**
(45) Veröffentlichungstag und Bekanntmachung des Hinweises auf die Patenterteilung: **14.06.1995**
(21) Anmeldenummer: 92117450.4
(22) Anmeldetag: 13.10.1992
(51) Int. Cl.: B65G 69/28

(54) **Niederhalte-Mechanismus für Überfahrbrücken**
Holddown mechanism for a dockboard
Mécanisme de retenue pour rampe de chargement

(30) Priorität: 23.10.1991 DE 9113153 U
(43) Veröffentlichungstag der Anmeldung: 28.04.1993
(73) Patentinhaber: VAN WIJK NEDERLAND B.V., NL-8243 PJ Lelystad (NL)
(72) Erfinder: Pereira das Dores, Antonio, NL-8224 HL Lelystad (NL)
(74) Vertreter: Beil, Hans Chr., Dr.

(56) Entgegenhaltungen:
- US-A- 3 117 332
- US-A- 3 249 956
- US-A- 3 368 229

## Beschreibung

Die Erfindung betrifft einen Niederhalte-Mechanismus für mechanische Überfahrbrücken.

Bei Überfahrbrücken liegt folgende Situation bezüglich des Be- und Entladevorganges vor:
Die an ihrem rampenseitigen Ende um eine waagrechte Achse schwenkbare Brückenplattform wird durch geeignete federunterstützte Antriebe in die höchste Lage bewegt. Dort klappt durch geeignete Vorrichtungen die Verlängerung aus, eine Bedienungsperson begibt sich auf die Plattform. Durch das zusätzliche Gewicht senkt sich diese auf die Ladefläche des zu be- bzw. entladenden Fahrzeuges. Ein Niederhalte-Mechanismus sorgt dafür, daß die Plattform stets den vertikalen Bewegungen des Fahrzeuges, die beim Ein- und Ausfahren mit Flurförderzeugen entstehen, folgt, und zwar sowohl nach oben als auch nach unten.

Bestehende Systeme arbeiten mit einer Zahnstange mit Verriegelung (siehe z. B. US-A-3.368.229). Die Bewegung nach unten erfolgt widerstandslos. Hebt sich die Fahrzeugladefläche, so bewirkt eine eingebaute Feder, daß die Plattform ein Stück angehoben werden kann. Wird die Plattform zu weit angehoben, entriegelt eine Entriegelungskette die Verriegelung und die Zahnstange hebt sich jeweils um einen Zahn aus der Verriegelung. Nachteil des Zahnstangensystems ist der entstehende Lärm und das nicht kontinuierliche, sondern aufgrund der Verzahnung ruckartige Nachgeben beim Anheben der Plattform. Ferner ist die Herstellung dieser Systeme relativ aufwendig.

Aus der EP-A 0 428 805 ist ein weiterer Mechanismus bekannt, der auf der Basis von Öl und Gasdruck arbeitet. Dieser ist jedoch ebenfalls verhältnismäßig aufwendig herzustellen.

Schließlich ist aus US-A-3 249 956 und US-A-117 332 noch ein Niederhalte-Mechanismus auf der Basis des Reibschlußeffektes bekannt.

Ziel der Erfindung ist es, einen Niederhalte-Mechanismus zu entwickeln, der kontinuierlich wirkt, dessen Lärmpegel niedrig ist und der einfach und kostengünstig herzustellen ist.

Dieses Ziel wird neuerungsgemäß durch einen Niederhalte-Mechanismus gemäß Anspruch 1 erreicht.

Vorteilhafte Weiterbildungen der gegenstander der Anspruchs 1 gehen aus den Unteransprüchen hervor.

Nachstehende Figuren erläutern eine Ausführungsform der Erfindung:
Fig. 1 zeigt einen schematischen Längsschnitt durch eine Überfahrbrücke zur Erläuterung der Gesamtsituation.

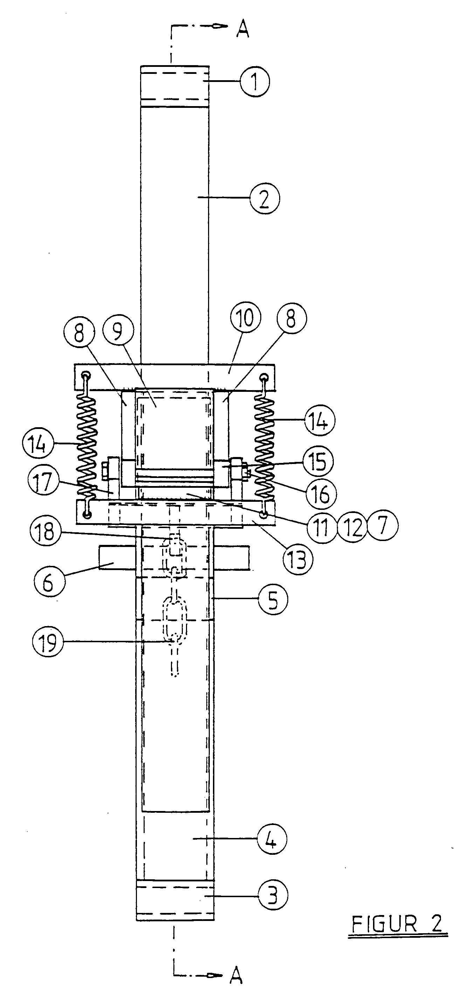

Fig. 2 zeigt eine Vorderansicht des neuerungsgemäßen Niederhalte-Mechanismus.

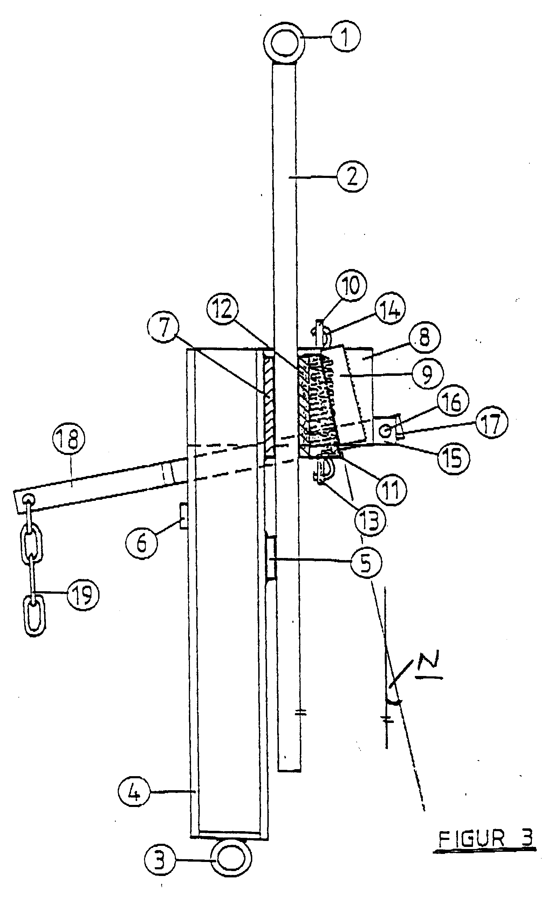

Fig. 3 zeigt einen Schnitt längs A-A durch den Mechanismus gemäß Fig. 2.

### Fig. 1

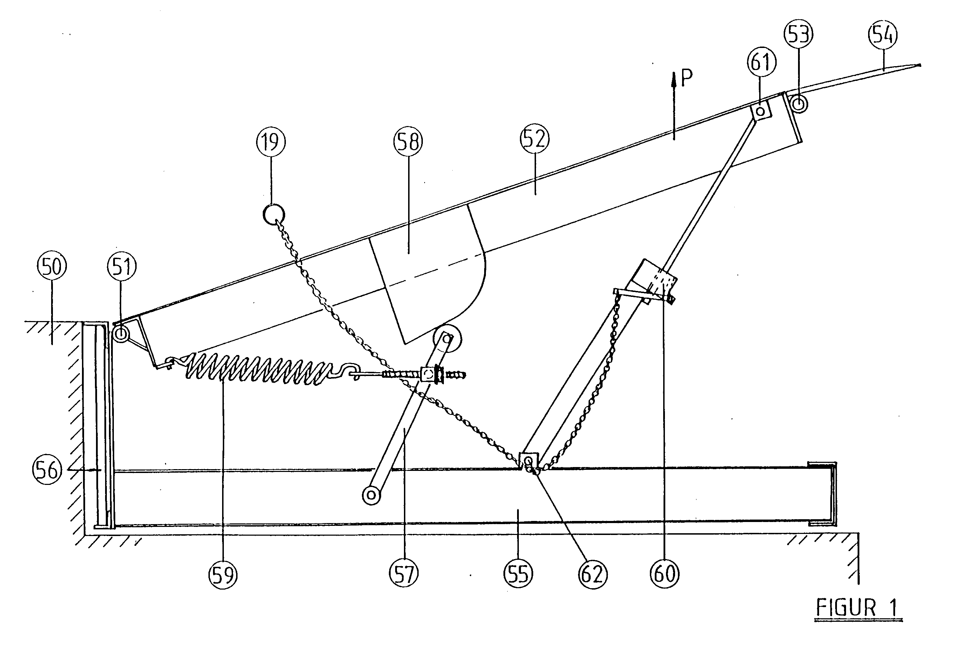

Fig. 1 zeigt den in Rampe (50) integrierten unteren Brückenrahmen (55) mit hinterem Rahmen (56). Die Brückenplattform (52) mit um Achse (53) drehbarer Verlängerung (54) ist in Achse (51) drehbar am hinteren Rahmen (56) gelagert. Ein Antriebsmechanismus, der z.B. aus Liftarm (57), Kamm (58) und Zugfeder (59) bestehen kann, sorgt stets für eine Aufwärtskraft (P) in der Plattform (52). Um eine gute Brückenfunktion zu gewährleisten, ist ein Niederhalte-Mechanismus (60) zwischen Widerlager (62) des unteren Rahmens (55) und Widerlager (61) der Plattform (52) befestigt. Dieser Mechanismus soll eine freie Bewegung der Plattform (52) nach unten zulassen, jedoch der durch den Antrieb aufgebrachten Kraft (P) nach oben standhalten, so daß ein selbständiges Anheben der Plattform (52) verhindert werden kann. Der Niederhalte-Mechanismus (60) sollte ferner mittels einer geeigneten Vorrichtung, z.B. einer Zugkette (19), entriegelt werden können. Dies ermöglicht es, die Plattform (52) von ihrer Ruhestellung in die Arbeitsstellung zu bringen. Die Aufwärtskraft (P) entspricht annähernd dem Eigengewicht der Bedienungsperson. Diese senkt durch Betreten der Plattform (52) selbige in Lade- bzw. Ruhestellung (letzteres mit eingeklappter Verlängerung (54)) ab.

Darüberhinaus soll der Niederhalte-Mechanismus ein ständiges Mitbewegen der Überladebrücke mit der Fahrzeugladefläche gewährleisten. Denn hebt sich die zu be- bzw. entladende Fahrzeugladefläche während des Ladevorganges bei aufliegender Verlängerung, so vergrößert sich die Aufwärtskraft (P). Um der Ladefläche nach oben zu folgen, muß also bei vergrößerter Aufwärtskraft (P) der Niederhalte-Mechanismus nachgeben. Nur so ist die sogenannte "Schwimmstellung" der Überladebrücke, also die kontinuierliche Bewegungskoinzidenz von Ladebrücke und Ladefläche, möglich.

Der neuerungsgemäße Mechanismus erfüllt alle genannten Kriterien, wie nachfolgend erläutert wird.

### Fig. 2 und 3

Der Niederhalte-Mechanismus umfaßt im wesentlichen ein Vierkantrohr (4) mit einer Befestigung, vorzugsweise ein Auge (3), am Widerlager (62) der Ladebrücke, sowie eine oberhalb ihrer Mitte angeordnete Gleitplatte (5) sowie eine an derselben Seite am oberen Ende angeordnete Bremsplatte (7). Entlang der Gleitplatte (5) und der Bremsplatte (7) ist parallel zu Rohr (4) eine bewegliche Stange (2), vorzugsweise ein Flacheisen, angeordnet. Diese ist mittels einer geeigneten Vorrichtung, z.B. Auge (1), im Widerlager (61) der Ladebrücke befestigt. In Höhe der Bremsplatte (7) sind beidseitig am Rohr (4) zwei Lagerplatten (8) parallel zueinander angeordnet, die ein Widerlager (9) mit einer Neigung (N) kleiner 90°, insbesondere kleiner 50°, aufweisen. In der durch die Neigung (N) zwischen Widerlager (9) und der Stange (2) zwischen den Platten (8) vorhandenen trapezförmigen Öffnung befindet sich ein trapezförmiger Keil (11) mit einer daran befindlichen Bremsplatte (12). Dieser Keil (11) mit Bremsplatte (12) ist entsprechend der Öffnung bzw. der Neigung (N) dimensioniert und kann in Richtung der Stange (2) eine Translationsbewegung ausführen. Sowohl die Lagerplatten (8) als auch Keil (11) weisen an ihrer oberen bzw. unteren Begrenzung ein Flacheisen (10) bzw. (13) auf. Zwischen diesen Flacheisen (10) und (13) sind zwei Zugfedern (14) gespannt, die den Keil (11) mit Bremsplatte (12) in die trapezförmige Öffnung zwischen Widerlager (9) und Stange (2) drücken.

Auf diese Weise wird Stange (2) von den Bremsplatten (7) und (12) eingeklemmt, so daß die Augen (1) und (3) sich nicht voneinander entfernen können, da die Reibung zwischen den Bremsplatten (7) und (12) und der Stange (2) dies verhindert. Somit kann die Kraft (P), die durch den Antriebsmechanismus erzeugt wird, durch den Niederhalte-Mechanismus (60) gehalten werden. Hierfür entscheidend sind die Reibungskoeffizienten der Bremsplatten (7) und (12) und der Stange (2) einerseits sowie die Größe der Neigung (N) andererseits. Vorzugsweise werden daher als Bremsplatten (7),(12) KFZ-Scheibenbremsklötze bekannter Art bzw. ein Vierkantrohr aus Stahl sowie eine Neigung (N) von 40° bis 85°, insbesondere 60° bis 75°, gewählt. Insbesondere bevorzugt wird eine Neigung von 1 bis 50° und noch bevorzugter von 3 bis 10°.
Der Keil selbst ist vorzugsweise aus Stahl gefertigt und weist eine der Dimension des genannten Zwischenraums entsprechende Trapezform auf. Die genannten Widerlager sind herkömmlicher Art.

Hebt sich nun die Fahrzeugfläche mit aufliegender Verlängerung (54), vergrößert sich die Aufwärtskraft (P) erheblich. Dies bewirkt, daß der Reibungsschluß überwunden wird und Auge (3) von Auge (1) wegbewegt wird, bis die Kraft (P) soweit abfällt, daß der Reibungsschluß wieder entsteht. Dies ermöglicht ein millimetergenaues Mitbewegen der Plattform (52) mit der Ladefläche des Fahrzeuges, wenn diese sich hebt.
Senkt sich die Ladefläche mit der Plattform (52) bei Belastung, nähern sich Auge (1) und (3) einander. Dies kann ungehindert stattfinden, da Keil (11) mit Bremsplatte (12) dann aus der trapezförmigen Öffnung zwischen Widerlager (9) und Stange (2) gedrückt wird, also kein Reibungsschluß entsteht.

Der Mechanismus erfüllt also die Forderung nach kontinuierlicher Koinzidenz der Bewegung von Ladebrücke und Ladefläche. Ruckartige Ausgleichsbewegungen werden durch die apparativ einfache Konstruktion ebenso vermieden wie die durch den diskontinuierlichen Ausgleich bedingten Bewegungsgeräusche.

Der Niederhalte-Mechanismus für Ladebrücken weist ferner eine Entriegelungsvorrichtung auf, um die Plattform (52) von einer tiefen Stellung, wie z.B. der Ruhestellung, in eine höhere Arbeitstellung zu bewegen.

Diese Entriegelungsvorrichtung umfaßt vorzugsweise einen Entriegelungshebel (18), der über eine Gabel (17) mit Bolzen (16) an den Ohren (15) der Lagerplatten (8) etwa senkrecht zu Rohr (4) bzw. Stange (2) oberhalb des Flacheisens (13) befestigt ist und an ihrem freien Ende eine Kette (19) aufweist. Diese Kette (19) steht mit der Überfahrbrücke in Verbindung. Zieht man an der Kette (19), drücken die Arme der Gabel (17) das Flacheisen (13) nach unten. Dies hat zur Folge, daß das Flacheisen (13) den Keil (11) mit Bremsplatte (12) aus der trapezförmigen Öffnung zwischen Widerlager (9) und Stange (2) herausbewegt, so daß der Reibungsschluß verloren geht und der Antriebsmechanismus (hier (57), (58), (59)) die Plattform (52) nach oben bewegt. Dabei spannen sich die Federn (14). Wird die Kette (19) entspannt, ziehen die Federn (14) den Keil (11) mit Bremsplatte (12) wieder in die trapezförmige Öffnung zwischen Widerlager (9) und Stange (2) zurück. Der Reibungsschluß entsteht wieder, alle Bewegungen können wie geschildert ablaufen.

In einer weiteren Ausführungsform ist statt des Bremsklotzes (12) (Bremsplatte) eine Gleitplatte (12) vorhanden.

Es ist darüberhinaus bevorzugt, das Widerlager (9) durch Rollen zu ersetzen, welche die Reibung zwischen dem Keil (11) verringern.

Ferner ist eine Ausführungsform bevorzugt, worin der Bremsklotz (7) und die Gleitplatte (5) nicht verwendet werden.

In einer weiteren bevorzugten Ausführungsform kann als Entriegelungsvorrichtung eine Feder verwendet werden, die Auge (3) an Rohr (4) befestigt und eine Translationsbewegung in Richtung des Rohres (4) unter Spannung zuläßt, wenn sich die Fahrzeugladefläche mit aufliegender Verlängerung (54) hebt. Das Auge (3) wird ferner bei dieser Ausführung mittels eines Zugkabels mit dem Flacheisen (13) verbunden. Dieses Zugkabel spannt sich bei einem bestimmten, von der Gesamtkonstruktion abhängigen Abstand zwischen Auge (3) und Rohr (4). Bei weiterer Lagerveränderung des Auges (3) zieht das Zugkabel sodann das Flacheisen (13) in Richung Auge (3), so daß der Keil (11) mit Bremsplatte (12) aus der trapezförmigen Öffnung zwischen Widerlager (9) und Stange (2) herausbewegt wird. Dadurch wird der Reibungsschluß solange unterbrochen, bis das Zugkabel wieder entspannt ist. Danach ziehen die Federn (14) den Keil (11) mit Bremsplatte (12) über Flacheisen (13) wieder in die den Reibungsschluß bedingende Stellung.

Der Mechanismus erfüllt somit alle eingangs geschilderten Kriterien. Er ist einfach in der Konstruktion, aus leicht zugänglichen Materialien herstellbar und arbeitet mechanisch und unabhängig von zusätzlichen Steuerungsmechanismen, wie es z.B. bei Konstruktionen unter Öl-Gasdruck-Kontrolle erforderlich ist.

## Patentansprüche

1. Niederhalte-Mechanismus für Überfahrbrücken für Laderampen mit einer an ihrem rampenseitigen Ende um eine waagrechte Achse (51) verschwenkbaren Brückenplattform (52), die eine um Achse (53) drehbar gelagerte ein- und ausklappbare Verlängerung (54), einen hinteren Rahmen (56), einen unteren Rahmen (55) sowie einen eine Aufwärtskraft (P) erzeugenden Antriebsmechanismus zum Anheben der Brückenplattform (52) und einen zwischen einem ersten Widerlager (62) des unteren Rahmens (55) und einem zweiten Widerlager (61) der Brückenplattform (52) wirkenden Niederhalte-Mechanismus (60) aufweist, wobei dieser Niederhalte-Mechanismus (60)
1.1 ein Vierkantrohr (4) mit einem am ersten Widerlager (62) befestigten ersten Auge (3) sowie mit einer oberhalb der Mitte des Vierkantrohres (4) beidseitig parallel zueinander angeordneten Lagerplatten (8), die ein drittes Widerlager (9) mit einer Neigung (N) kleiner 50° aufweisen und in deren durch die Neigung (N) begrenztem Zwischenraum ein Keil (11) mit einer Bremsplatte (12) angeordnet ist,
1.2 eine parallel zu Rohr (4) beweglich angeordnete Stange (2), welche mittels zweitem Auge (1) am zweiten Widerlager (61) befestigt ist und den durch die Neigung (N) des dritten Widerlagers (9) geschaffenen Raum begrenzt, in dem der Keil (11) mit Bremsplatte (12) angeordnet ist,
1.3 zwei Flacheisen (10) bzw. (13) an der oberen bzw. unteren Begrenzung sowohl der Lagerplatten (8) als auch des dazwischen angeordneten Keils (11), zwischen denen zwei Zugfedern (14) zur Bewegung des Keils (11) mit Bremsplatte (12) in die Öffnung zwischen drittem Widerlager (9) und Stange (2) gespannt sind,
1.4 sowie einen Entriegelungsmachnismus (18)
umfaßt.

2. Niederhalte-Mechanismus nach Anspruch 1, wobei der Entriegelungsmechanismus einen Entriegelungshebel (18) umfaßt, der über eine Gabel (17) mit Bolzen (16) an den Ohren (15) der beiden Lagerplatten (8) etwa senkrecht zu Vierkantrohr (4) bzw. Stange (2) oberhalb des Flacheisens (13) befestigt ist und an seinem freien Ende eine mit der Überfahrbrücke in Verbindung stehende Kette (19) aufweist.

3. Niederhalte-Mechanismus nach Anspruch 1, wobei der Entriegelungsmechanismus eine Feder, die das erste Auge (3) an dem Vierkantrohr (4) befestigt, sowie ein an dem ersten Auge (3) angeordnetes Zugkabel umfaßt, welches seinerseits mit dem Flacheisen (13) verbunden ist.

4. Niederhalte-Mechanismus nach einem der Ansprüche 1 bis 3, wobei die Neigung (N) des dritten Widerlagers (9) 1° bis 50°, vorzugsweise 3° bis 10°, beträgt.

5. Niederhalte-Mechanismus nach einem der Ansprüche 1 bis 4, wobei
5.1 oberhalb der Mitte des Vierkantrohres (4) eine Gleitplatte (5) und an derselben Seite am oberen Ende des Vierkantrohres (4) eine zweite Bremsplatte (7) befestigt ist und
5.2 eine parallel zu Rohr (4), zwischen der ersten Bremsplatte 12 und der zweiten Bremsplatte (7) beweglich angeordnete Stange (2), welche mittels zweitem Auge (1) am zweiten Widerlager (61) befestigt ist und den durch die Neigung (N) des dritten Widerlagers (9) geschaffenen Raum begrenzt, in dem der Keil (11) mit der ersten Bremsplatte (12) angeordnet ist.

6. Niederhalte-Mechanismus nach einem der Ansprüche 1 bis 5, wobei als Bremsplatten (7) bzw. (12) KFZ-Scheibenbremsklötze verwendet werden.

7. Niederhalte-Mechanismus nach einem der Ansprüche 1 bis 6, wobei statt des Bremsklotzes (12) eine weitere Gleitplatte (12) vorhanden ist.

8. Niederhaltemechanismrns nach einem der Ansprüche 1 bis 7, statt des dritten Widerlagers (9) reibungsverringernde Rollen (9) vorhanden sind.

## Claims

1. Hold-down mechanism for bridging devices for loading ramps having a bridge platform (52) which is pivotable at its ramp-side end about a horizontal axis (51) and which comprises an extension (54) which can be swung inwards and outwards and which is mounted so as to rotate about an axis (53), a rear frame (56), a lower frame (55) and a drive mechanism generating an upward force (P) in order to raise the bridge platform (52) and a hold-down mechanism (60) which acts between a first abutment (62) of the lower frame (55) and a second abutment (61) of the bridge platform (52), this hold-down mechanism (60) comprising:
1.1 a rectangular tube (4) having a first lug (3) secured on the first abutment (62) and having bearing plates (8) which are disposed above the centre of the rectangular tube (4) on both sides and parallel to one another, which comprise a third abutment (9) having an inclination (N) of less than 50° and in whose intermediate space, delimited by the inclination (N), a wedge (11) is disposed with a brake plate (12);
1.2 a rod (2) which is disposed so as to move parallel to the tube (4) and which is secured by means of a second lug (1) on the second abutment (61) and delimits the space which is created by the inclination (N) of the third abutment (9) and in which the wedge (11) is disposed with the brake plate (12);
1.3 two flat bars (10) and (13) respectively at the upper and lower delimitations respectively both of the bearing plates (8) and also of the wedge (11) disposed therebetween, between which flat bars two tension springs (14) are tensioned in order to move the wedge (11) with the brake plate (12) into the aperture between the third abutment (9) and the rod (2); and
1.4 an unlocking mechanism (18).

2. Hold-down mechanism according to Claim 1, wherein the unlocking mechanism comprises an unlocking lever (18) which is secured above the flat bar (13) by means of a fork (17) with bolts (16) to the lugs (15) of the two bearing plates (8) approximately perpendicular to the rectangular tube (4) or rod (2) respectively and comprises at its free end a chain (19) connected to the bridging device.

3. Hold-down mechanism according to Claim 1, wherein the unlocking mechanism comprises a spring securing the first lug (3) to the rectangular tube (4) and a tension cable which is disposed on the first lug (3) and which is in turn connected to the flat bar (13).

4. Hold-down mechanism according to any one of Claims 1 to 3, wherein the inclination (N) of the third abutment (9) is 1° to 50° and preferably 3° to 10°.

5. Hold-down mechanism according to any one of Claims 1 to 4, wherein:
5.1 a slide plate (5) is secured above the centre of the rectangular tube (4) and a second brake plate (7) is secured on the same side at the upper end of the rectangular tube (4); and
5.2 a rod (2) which is disposed so as to move parallel to the tube (4) between the first brake plate (12) and the second brake plate (7) and which is secured by means of the second lug (1) on the second abutment (61) and delimits the space which is created by the inclination (N) of the third abutment (9) and in which the wedge (11) is disposed with the first brake plate (12).

6. Hold-down mechanism according to any one of Claims 1 to 5, wherein motor vehicle disc brake blocks are used as brake plates (7) and (12) respectively.

7. Hold-down mechanism according to any one of Claims 1 to 6, wherein a further slide plate (12) is present instead of the brake block (12).

8. Hold-down mechanism according to any one of Claims 1 to 7, wherein friction-reducing rollers (9) are present instead of the third abutment (9).

## Revendications

1. Mécanisme de retenue pour des ponts de passage pour des rampes de chargement, comportant une plate-forme (52) susceptible d'être basculée par son extrémité côté rampe autour d'un axe horizontal (51), ladite plate-forme présentant une rallonge (54) qui est montée en rotation autour d'un axe (53) et qui peut être rabattue et déployée ; un cadre amère (56) ; un cadre inférieur (55) ; et un mécanisme d'entraînement produisant une force vers le haut (P) pour le soulèvement de la plate-forme (52) du pont, et un mécanisme de retenue (60) agissant entre un premier contrefort (62) du cadre inférieur (55) et un second contrefort (61) de la plate-forme (52) du pont, ce mécanisme de retenue (60) comportant :
1.1 un tube carré (4) comprenant un premier oeillet (3) fixé sur le premier contrefort (62), ainsi que des plateaux de montage (8) agencés au-dessus du milieu du tube carré (4) et des deux côtés parallèlement l'un à l'autre, lesdits plateaux de montage présentent un troisième contrefort (9) avec une inclinaison (N) inférieure à 50°, et un coin (11) comportant un plateau de freinage (12) étant agencé dans l'espace intermédiaire délimité par l'inclinaison (N) entre les plateaux de montage,
1.2 une tige (2) agencée de façon parallèlement mobile au tube (4), qui est fixée sur le second contrefort (61) par l'intermédiaire d'un second oeillet (1) et qui délimite l'espace produit par l'inclinaison (N) du troisième contrefort (9), espace dans lequel est agencé le coin (11) comportant le plateau de freinage (12),
1.3 deux plats d'acier (10) et (13), prévus sur la délimitation supérieure ou inférieure aussi bien des plateaux de montage (8) que du coin (11) agencé entre les deux, et entre lesquels sont bandés deux ressorts de traction (14) pour le déplacement du coin (11) comportant le plateau de freinage (12) dans l'ouverture entre le troisième contrefort (9) et la tige (2),
1.4 ainsi qu'un mécanisme de déverrouillage (18).

2. Mécanisme de retenue selon la revendication 1, dans lequel le mécanisme de déverrouillage comprend un levier de déverrouillage (18) qui est fixé par l'intermédiaire d'une fourchette (17) comportant des boulons (16) sur les oreilles (15) des deux plateaux de montage (8) approximativement perpendiculairement au tube carré (4) ou à la tige (2) au-dessus du plat d'acier (13), et qui présente à son extrémité libre une chaîne (19) en liaison avec le pont de passage.

3. Mécanisme de retenue selon la revendication 1, dans lequel le mécanisme de déverrouillage comporte un ressort qui fixe le premier oeillet (3) sur le tube carré (4), ainsi qu'un câble de traction agencé sur le premier oeillet (3), ce câble étant relié à son tour au plat d'acier (13).

4. Mécanisme de retenue selon l'une quelconque des revendications 1 à 3, dans lequel l'inclinaison (N) du troisième contrefort (9) est de 1° à 50°, de préférence de 3° à 10°.

5. Mécanisme de retenue selon l'une quelconque des revendications 1 à 4, dans lequel :
5.1 un plateau coulissant (5) est fixé au-dessus du milieu du tube carré (4) et un second plateau de freinage (7) est fixé du même côté à l'extrémité supérieure du tube carré (4), et
5.2 une tige (2) est agencée de façon mobile parallèlement au tube (4) entre le premier plateau de freinage (12) et le second plateau de freinage (7), cette tige étant fixée au moyen du second oeillet (1) sur le second contrefort (61), et délimitant l'espace produit par l'inclinaison (N) du troisième contrefort (9), espace dans lequel est agencé le coin (11) comportant le premier plateau de freinage (12).

6. Mécanisme de retenue selon l'une quelconque des revendications 1 à 5, dans lequel sont utilisés en tant que plateaux de freinage (7) ou (12) des plaquettes de frein à disque de véhicule automobile.

7. Mécanisme de retenue selon l'une quelconque des revendications 1 à 6, dans lequel un autre plateau coulissant (12) est prévu au lieu de la plaquette de frein (12).

8. Mécanisme de retenue selon l'une quelconque des revendications 1 à 7, dans lequel des galets (9) réduisant la friction sont prévus au lieu du troisième contrefort (9).
